# EUROPÄISCHE PATENTSCHRIFT

(11) **EP 1 599 330 B1**
(45) Veröffentlichungstag und Bekanntmachung des Hinweises auf die Patenterteilung: **04.11.2009**
(21) Anmeldenummer: 04706117.1
(22) Anmeldetag: 29.01.2004
(51) Int. Cl.: B29C 49/04

(54) **VERFAHREN UND VORRICHTUNG ZUR HERSTELLUNG VON HOHLKÖRPERN**
METHOD AND DEVICE FOR THE PRODUCTION OF HOLLOW BODIES
PROCEDE ET DISPOSITIF POUR FABRIQUER DES CORPS CREUX

(30) Priorität: 05.03.2003 CH 341032003; 25.03.2003 CH 517032003
(43) Veröffentlichungstag der Anmeldung: 30.11.2005
(73) Patentinhaber: SOPLAR SA, CH-9450 Altstätten (CH)
(72) Erfinder: DÜRINGER, Markus, A-6972 Fussach (AT); HAMMERLE, Martin, A-6832 Sulz (AT)
(74) Vertreter: Hasler, Erich
(86) Internationale Anmeldenummer: PCT/CH2004/000047
(87) Internationale Veröffentlichungsnummer: WO 2004/078457

(56) Entgegenhaltungen:
- WO-A-02/081180
- NL-A- 278 810
- US-A- 2 288 454
- US-A- 3 163 690
- US-A- 4 806 092
- US-A- 5 330 342

## Beschreibung

Die Erfindung betrifft ein Verfahren zur Herstellung von Hohlkörpern gemäss dem Oberbegriff des Patentanspruchs 1. Die Erfindung betrifft auch eine für diesen Zweck geeignete Vorrichtung.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt im Extrusionsblasverfahren, insbesondere in einem Schlauchblasverfahren. Dabei wird von einem Extruderkopf ein Kunststoffschlauch extrudiert, in Blasformwerkzeuge eingebracht, über einen Blasdorn durch Überdruck aufgeblasen und durch Kühlung ausgehärtet. Die dafür eingesetzten Extrusionsblasmaschinen besitzen in der Regel wenigstens einen Extruder zur Zuführung des Kunststoffmaterials. Der Ausgang des Extruders ist mit dem Extruderkopf verbunden, an dessen vorzugsweise in der Öffnungsweite regulierbarer Austrittsdüse der ein oder mehrschichtig extrudierte Schlauch austritt. Der extrudierte Schlauch wird an ein Blasformwerkzeug übergeben und innerhalb dessen Kavität mit einem Blasdorn aufgeblasen. Der Kunststoffschlauch kann ein- oder mehrschichtig sein, er kann als Schlauch mit Sichtstreifen, Dekorstreifen oder bezogen auf den Umfang mit mehreren, beispielsweise verschiedenfarbigen, Segmenten extrudiert sein.

Die Blasstation mit dem Blasdorn ist üblicherweise seitlich des Extrusionskopfes angeordnet, und das mit dem extrudierten Schlauch beschickte Blasformwerkzeug muss in die Blasstation bewegt werden, wo dann der Blasdorn üblicherweise von oben in die Blasformkavität eingefahren wird. Für den kontinuierlichen Betrieb sind bei einer Art der bekannten Extrusionsblasmaschinen üblicherweise zwei Blasstationen vorgesehen. Jede Blasstation ist mit einem Blasformwerkzeug ausgestattet. Die Blasstationen sind dabei zu beiden Seiten des Extruders, einander gegenüberliegend angeordnet und weisen Blasformtische mit den Blasformwerkzeugen auf, die abwechselnd unter den Extruderkopf bewegt werden, um den extrudierten Schlauch zu empfangen. Dabei wird das Blasformwerkzeug zum Abholen des Schlauches geöffnet. Nach dem Schliessen des Blasformwerkzeugs wird der Schlauch zwischen dem Extrusionskopf und dem Blasformwerkzeug abgetrennt. Danach wird der Blasformtisch wieder in die Blasstation bewegt, wo der Blasdorn in die Kavität des Blasformwerkzeugs eingefahren und der Schlauch gemäss der Blasformkavität aufgeblasen und danach entnommen wird. Bei Mehrfachextrusionsköpfen und Mehrfachblasformwerkzeugen ist jede Blasstation mit einer korrespondierenden Anzahl von Blasdornen ausgestattet, die gemeinsam in die Blasformkavitäten eingefahren werden. Gesamthaft bilden der Extruder mit dem Extruderkopf und die beiden Blasstationen etwa die Form eines T. Dabei stellt der Extruder mit dem Extruderkopf den langen T-Strich dar, während die beiden Blasformtische abwechselnd entlang der kurzen Querstrichhälften unter den Extruderkopf bewegbar sind.

Extrusionsblasmaschinen der vorstehend beschriebenen Gattung sind erprobt und erlauben bereits hohe Produktionsleistungen. Dennoch besteht der Wunsch nach Verbesserungen, um die erforderlichen Werkzeuginvestitionen, d.h. die Kosten pro Blasformkavität, noch weiter zu senken. Die Notwendigkeit, die Blasformtische mit den Blasformwerkzeugen seitlich zu den Blasstationen zu bewegen, führt zu Totzeiten, die sich aus dem zurückzulegenden Weg und der Bewegungsgeschwindigkeit der Blasformtische ergibt. Wegen der relativ grossen Massen, die beschleunigt und wieder abgebremst werden müssen, kann die Bewegungsgeschwindigkeit nicht beliebig gross gewählt werden. Auch können die seitlich zurückzulegenden Wege aus baulichen Gründen nicht weiter verkürzt werden. Der extrudierte Schlauch muss nach dem Befüllen des Blasformwerkzeugs abgetrennt werden. Dies erfolgt üblicherweise durch ein seitlich zugestelltes Trennmesser. Das aus der Extrusionsdüse ragende, kontinuierlich weiter extrudierte Schlauchteil pendelt nach dem Schneidvorgang hin und her. Insbesondere bei sehr schnellen Taktzyklen kann das Pendeln des Schlauches zu Schwierigkeiten bei der Übergabe des Schlauches an die Blasformkavität führen.

Es sind auch Extrusionsblasmaschinen bekannt, bei denen eine Anzahl von Blasformwerkzeugen auf einem rotierenden Rad angeordnet ist. Das Rad steht etwa vertikal und führt die Blasformwerkzeuge etwa tangential an den vom Extrusionskopf kontinuierlich extrudierten Kunststoffschlauch heran. Kurz vor Erreichen des extrudierten Kunststoffschlauchs wird das herangeführte Blasformwerkzeug geöffnet, um den Schlauch abzuholen. Beim Weiterdrehen des Rads wird das Blasformwerkzeug um den eingelegten Schlauch geschlossen und dieser beim Weiterdrehen schliesslich abgeschert. Die Anordnung der Blasformwerkzeuge und die Drehgeschwindigkeit des Rads sind derart gewählt, dass der Schlauch erst abgeschert wird, wenn sich das nachfolgende Blasformwerkzeug um das nächst Schlauchstück geschlossen hat. Der in der Kavität des Blasformwerkzeuges befindliche Schlauch gelangt beim Weiterdrehen des Rades schliesslich in die Blasstation, wo er über einen seitlich in das Formwerkzeug eingeführten Blasdorn gemäss der Blasformkavität aufgeblasen wird. Schliesslich wird der aufgeblasene Hohlkörper durch Öffnen aus dem Blasformwerkzeug ausgegeben. Das am rotierenden Rad angeordnete Blasformwerkzeug wird bei der Weiterbewegung wieder geschlossen und wieder an den Extrusionskopf herangeführt, um einen weiteren extrudierten Schlauch aufzunehmen.

Nachteilig an den Rad-Blasmaschinen ist der Umstand, dass sie wegen der grossen Zahl von am Rad angeordneten separaten Blasformwerkzeugen einen relativ hohen Investitionsaufwand für die Bereitstellung der Blasformwerkzeuge erfordern. Auch sind die Blasformwerkzeuge in der Regel nicht vollständig identisch. Dies kann von Blasformwerkzeug zu Blasformwerkzeug zu Qualitätsunterschieden bei den hergestellten Hohlkörpern führen. Der Einsatz von Blasformwerkzeugen mit mehreren Blasformkavitäten gestaltet sich relativ schwierig und teuer. Die Blasformwerkzeuge sind nur an fest vorgegebenen Montagepunkten am Rad befestigbar. Diese werden nach der maximal mit der Maschine herstellbaren Höhe des geblasenen Hohlkörpers festgelegt. Die einmal festgelegten Montagepunkte sind nicht mehr veränderbar. Dies ist auch eine Folge der bei diesen Maschinen üblichen mechanischen Steuerungen über Steuerkurven, Kurvenscheiben und dergleichen. Sollen auf der Rad-Blasmaschine Behälter mit kleinerer Bauhöhe geblasen werden, dann weisen die am Umfang des Rads montierten kleineren Blasformwerkzeuge einen grösseren Winkelabstand voneinander auf. Nachdem der Kunststoffschlauch kontinuierlich aus dem Extrusionskopf austritt, führt dies zu grösseren Abfallmengen in den Bereichen zwischen zwei Blasformwerkzeugen. Der extrudierte Kunststoffschlauch wird von dem entlang einer Kreisform unter dem Extrusionskopf vorbeibewegten Blasformwerkzeug übernommen. Dabei wird der seitlichen Zustellbewegung der schliessenden Blasformhälften eine Kreisbogenbewegung überlagert. Zwar wird durch einen möglichst grossen Radius des Rades versucht, diese Kreisbogenbewegung der Blasformhälften bei der Übernahme des Kunststoffschlauchs möglichst klein zu halten; sie kann aber nicht vollständig beseitigt werden. Auch der Umstand dass der Schlauch zwischen zwei aufeinander folgenden Blasformwerkzeugen einerseits vom Extruderkopf und andererseits vom vorlaufenden Blasformwerkzeug gehalten ist, kann an den geometrischen Verhältnissen nichts ändern. Unter ungünstigen Umständen kann es daher insbesondere bei komplexeren Behältergeometrien dazu kommen, dass der Schlauch nicht ideal in die Blaskavität eingelegt und teilweise zwischen aneinander anliegenden Bereichen der schliessenden Blasformhälften eingeklemmt wird. Dies kann zu unerwünschtem Ausschuss führen.

Aus der US 2,288,454 ist ein Verfahren zur Bildung von Hohlkörpern aus Kunststoff bekannt, bei dem zuerst ein Hals spritzgegossen wird und danach die Wandung des Hohlkörpers extrudiert wird. Dazu wird ein Extruderkopf in eine Blasform eingeführt, mit cem Extruderkopf Material in die Halsform gepresst, der Extruderkopf während dem Extrudieren durch die Blasform gefahren und gleichzeitig der Hohlkörper aufgeblasen, und schliesslich der Extruderkopf verschlossen, der Boden des Hohlkörpers ausgebildet.

Aus der US 5,330,342 ist eine Vorrichtung und ein Verfahren bekannt, um Preformlinge mit uneinheitlicher Wandstärke herzustellen. Mit einem ringförmigen Extrusionskopf wird Kunststoff in eine Halsform gepresst um einen Gefässhals zu giessen. Während die Halsform mit variierender Geschwindigkeit vom Extrusionskopf entfernt wird, wird die Öffnungsweite des Extrusionskopfes erweitert und verengt und dadurch ein rohrförmiges Kunststoffgebilde extrudiert, das mit einer Kragenform gehalten ist und zwischen der Kragenform und dem Extrusionskopf unterschiedliche Wanddicken aufweist. Schliesslich wird das rohrförmige Kunststoffgebilde in einer Blasform aufgeblasen und direkt am Extruderkopf abgetrennt.

Aus der NL 278810 sind ein Verfahren zum kontinuierlichen Herstellen von Kunststoffbehältern und eine Vorrichtung, die für ein solches Verfahren geeignet ist, bekannt. Der Kunststoffschlauch wird aus einem Extruderkopf in eine Kavität eingebracht. Mit zwei Pressteilen wird der Kunststoffschlauch zusammengepresst und so verschlossen und ein Boden gebildet. Im Extruderkopf ist eine Einblasöffnung vorhanden, durch welche der Kunststoffschlauch in der Kavität aufgeblasen wird. Mit den Pressteilen wird dann der Behälter noch während dem Blasen aus der Kavität gezogen. Dann werden die Pressteile vom Kunststoffbehälter gelöst und wieder in die Kavität eingeführt, in der nun ein neues Schlauchstück vorliegt. An der verpressten Stelle unterhalb des Bodens wird der frisch geblasene Behälter von einer Halterung gefasst und gezogen, während das Bodenstück in die Kavität zurückbewegt wird. Nun presst das Bodenstück den Kunststoffschlauch erneut zusammen und der Aufblasvorgang der neuen Flasche beginnt. Während des Aufblasens wird der Schlauch weiter extrudiert und die Pressteile längs in der Kavität verschoben. Der Schlauch wird daher während dem Extrudieren geblasen und innerhalb der Kavität verschoben.

Aufgabe der vorliegenden Erfindung ist es daher, die Nachteile der Verfahren und Vorrichtungen des Stands der Technik zu vermeiden. Es sollen ein Blasformverfahren und eine Extrusionsblasmaschine geschaffen werden, welche eine zuverlässige Verarbeitung verschiedener Kunststoffrohprodukte erlaubt. Bezüglich der Gestaltung der Behältergeometrien sollen möglichst viele Freiräume bestehen, und es sollen auch Behälter mit sehr komplexer Geometrie mit sehr engen Spezifikationen herstellbar sein. Bei der Herstellung kritischer Behältergeometrien oder dünnwandiger Behälter soll eine möglichst hohe Produktionssicherheit gewährleistet sein. Das Verfahren und die Vorrichtung zum Extrusionsblasen von Hohlkörpern sollen für die Herstellung grosser und kleiner Geometrien kompatibel sein. Dabei sollen unnötige Kunststoffabfälle weitgehend vermieden werden. Das Verfahren und die Vorrichtung sollen dahingehend modifiziert werden, dass unabhängig von der Anzahl der Kavitäten je Blasformwerkzeug weitgehend identische Behältereigenschaften und Qualitätsparameter erreicht werden können. Die im Versuch ermittelten Einstelldaten sollen weitgehend unverändert auf Produktionsanlagen übertragbar sein. Der Platzbedarf gegenüber bestehenden Maschinen soll nicht grösser sein, ja es soll sogar ermöglicht werden, diesen zu verringern. Totzeiten, wie sie bei den bekannten Maschinen bei der seitlichen Verschiebung der Blasformwerkzeuge in die Blasstationen auftreten, sollen verringert werden.

Die Lösung dieser Aufgaben besteht in einem Verfahren zum Herstellung von Hohlkörpern, welches die im kennzeichnenden Abschnitt des Patentanspruchs 1 angeführten Merkmale aufweist. Eine erfindungsgemässe Vorrichtung weist die im kennzeichnenden Abschnitt des unabhängigen Vorrichtungsanspruchs angeführten Merkmale auf. Weiterbildungen und/oder vorteilhafte Ausführungsvarianten der Erfindung sind Gegenstand der abhängigen Verfahrens- bzw. Vorrichtungsansprüche.

Bei dem Verfahren zur Herstellung von Hohlkörpern, insbesondere von Kunststoffflaschen, wird von einem Extruderkopf in einem vorgebbaren Takt ein Abschnitt eines Kunststoffschlauchs in eine Kavität eines Blasformwerkzeugs eingebracht. Innerhalb des Blasformwerkzeuges wird der Kunststoffschlauch über einen Blasdorn durch Überdruck gemäss der Blasformkavität aufgeblasen. Der fertig geblasene Hohlkörper wird schliesslich entformt. Der Kunststoffschlauch wird während eines gesamten Extrusions- und Blaszyklusses an gegenüberliegenden Seiten der Blasformwerkzeuganordnung kontinuierlich gehalten.

Bei dem erfindungsgemässen Verfahren ist der Kunststoffschlauch während eines gesamten Herstellungszyklusses, d.h. während eines gesamten Extrusions- und Blaszyklusses, an gegenüberliegenden Seiten der Blasformwerkzeuganordnung kontinuierlich gehalten. Dadurch ist der Kunststoffschlauch permanent geführt und Fehllagen können vermieden werden. Dadurch ist die Voraussetzung geschaffen, einen von einer Extrusionsdüse extrudierten Schlauch immer in dieselbe Blasformkavität einzubringen. Alle mit einer Extrusionsdüse-Blasformkavität-Anordnung hergestellten Hohlkörper erfahren auf diese Weise dieselben Einstell- und Werkzeugparameter. Qualitätsunterschiede infolge unterschiedlich grosser Toleranzen der Blasformkavitäten bei Anordnungen mit mehreren verschiedenen Blasformwerkzeugen entfallen. Totzeiten, die durch eine seitliche Verschiebung der Blasformwerkzeuganordnung gegenüber dem Extruderkopf erfolgen, entfallen, da die Blasformwerkzeuganordnung im Wesentlichen nur auf die Transportrichtung des Kunststoffschlauchs ausgerichtet ist. Das Aufblasen des in der Blasformkavität befindlichen Kunststoffschlauchs erfolgt unmittelbar nach der Beschickung der Blasformkavität mit dem extrudierten Kunststoffschlauch. Der Kunststoffschlauch ist während des gesamten Extrusions- und Blaszyklusses in einer definierten Lage gehalten und kann nicht mehr um seine Achse pendeln. Der Extruderkopf und die Blasformwerkzeuganordnung verbleiben während des gesamten Extrusions- und Blasvorgangs in einer vorgebbaren und justierbaren, geometrischen Lagebeziehung, und der Kunststoffschlauch kann immer optimal übernommen werden. Dadurch wird auch bei komplizierteren Geometrien der Blasformkavität die Gefahr eines unbeabsichtigten Einklemmens des Kunststoffschlauchs verringert. Die erfindungsgemässe Verfahrensführung erlaubt es, bei Bedarf die Lage des extrudierten Kunststoffschlauchs in Bezug auf die Blasformkavität gezielt zu verändern, um speziellen geometrischen Anforderungen Rechnung zu tragen.

In einer vorteilhaften Variante des erfindungsgemässen Verfahrens wird der Kunststoffschlauch erst nach dem vollständigen Aufblasen des Hohlkörpers abgetrennt. Das Abtrennen kann durch kontrolliertes Abquetschen oder auch durch Abscheren erfolgen. Vorzugsweise wird dazu ein Trennmesser oder dergleichen eingesetzt. Diese Verfahrensvariante unterscheidet sich sowohl von dem Blasverfahren mit den bekannten Rad-Blasmaschinen, bei denen der Schlauch nach der Übernahme durch das Blasformwerkzeug beim Weiterdrehen des Rades im wesentlichen unkontrolliert abgeschert wird, als auch von den kontinuierlichen und diskontinuierlichen Blasverfahren mit bekannten Extrusionsblasmaschinen, bei denen der Kunststoffschlauch vor dem eigentlichen Blasvorgang kontrolliert geschnitten wird. Zwar bedingt die erfindungsgemässe Verfahrensführung, dass der Blasdorn für eine gewisse Zeit mit der Bewegung des Extruderkopfes und/oder der Extrusions- oder Übergabegeschwindigkeit des Kunststoffschlauchs an die Blasformwerkzeuganordnung synchronisiert werden muss. Durch diese einfache Massnahme ist aber sichergestellt, dass der Schlauch in jeder Phase des Herstellungszyklusses kontrolliert gehalten ist.

Die Trennung des Kunststoffschlauchs erfolgt mit Vorteil an der dem Extruderkopf abgewandten Seite der Blasformwerkzeuganordnung. Dadurch ist vor dem Abtrennen die Führung des Schlauchs über den auf dem Blasdorn befindlichen fertig geblasenen Hohlkörper und den Extruderkopf sichergestellt. Durch eine Anordnung der Trennstelle in unmittelbarer Nachbarschaft zur Mündung der Blasformkavität kann der Schlauchmaterialabfall unabhängig von der Höhe der Blasformkavität immer möglichst klein gehalten werden.

Bezogen auf die Bewegungsrichtung des Kunststoffschlauchs ist die Blasformwerkzeugeinrichtung zwischen dem Extruderkopf und dem Blasdorn angeordnet. Der Blasdorn wird durch eine Mündung der Blasformkavität eingefahren, die an der von der Extrusionsdüse abgewandten Seite der Blasformwerkzeuganordnung angeordnet ist. Der Ausgang der Extrusionsdüse und die axiale Erstreckung des Blasdorns sind dabei derart angeordnet, dass sie im Wesentlichen axial fluchten.

In einer Variante der Erfindung sind zur Verringerung der Totzeiten für jede Blasformkavität zwei oder mehr Blasdorne vorgesehen. Die Blasdorne können beispielsweise nebeneinander angeordnet sein und abwechselnd auf die Öffnungen der Blasformkavitäten zugestellt werden. In einer alternativen Ausführungsvariante sind mehrere Blasdorne derart an einer zentralen Blasdornhalterung befestigt, dass sie durch Rotation der Blasdornhalterung nacheinander zum Einsatz gelangen. Beispielsweise kann die Blasdornhalterung zwei Blasdorne tragen, die um 180° versetzt einander gegenüberliegen. Bei einer derartigen Ausführungsvariante wird nach dem Aufblasen des Schlauchs und dem Öffnen der Blasformwerkzeuganordnung die Blasdornhalterung um 180° gedreht. Der zweite Blasdorn ist somit bereits für das Aufblasen eines weiteren Schlauchabschnitts bereit, während der Hohlkörper am ersten Blasdorn noch auf seine Entnahme wartet. Es versteht sich, dass auch drehbare Blasdornhalterungen mit 3, 4 oder mehreren Blasdornen vorgesehen sein können. Der Winkel, um den die Blasdornhalterung jeweils weitergedreht werden muss, ergibt sich dann aus der Teilung von 360° durch die Anzahl Blasdome.

Die Anordnung an der der Extrusionsdüse abgewandten Seite der Blasformwerkzeuganordnung bietet auch die Möglichkeit, jeden Blasdorn mit einer Kalibriereinrichtung zu versehen, mit der bereits während des Blasvorgangs die Öffnung des geblasenen Hohlkörpers kalibriert wird. Dadurch entfällt eine separate Nachbearbeitungsstation, in der dieser Vorgang nachgeholt werden muss.

Bei einem kontinuierlichen Extrusionsblasverfahren wird der Kunststoffschlauch kontinuierlich aus der Extrusionsdüse des Extruderkopfes extrudiert. Nach der Übergabe des extrudierten Kunststoffschlauches an die Blasformkavität und während des gesamten Blasvorgangs wird der relative Abstand des Extruderkopfes von der Blasformwerkzeuganordnung vergrössert, damit er bei der weiteren Extrusion nicht gegen die Oberfläche der Blasformwerkzeuganordnung anläuft und der Schlauch in einer kontrollierten Ausrichtung gehalten werden kann. Dadurch wird dem Umstand Rechnung getragen, dass der Kunststoffschlauch kontinuierlich aus der Extrusionsdüse extrudiert wird, während der Aufblasvorgang in der Formkavität der Blasformwerkzeuganordnung ein diskontinuierlicher Prozess ist.

Die relative Abstandsveränderung zwischen dem Extruderkopf und der Blasformwerkzeuganordnung erfolgt wenigstens mit einer Geschwindigkeit, die der Austrittsgeschwindigkeit des Kunststoffschlauchs aus der Extrusionsdüse entspricht. Dadurch ist sichergestellt, dass der extrudierte Schlauch nicht auf die Oberfläche der Blasformwerkzeuganordnung aufläuft. Bei der Wahl einer grösseren Geschwindigkeit der Abstandsveränderung als der Extrusionsgeschwindigkeit wird der bereichsweise in der Blasformwerkzeuganordnung eingeklemmte Kunststoffschlauch gleichsam aus dem Düsenwerkzeug gezogen. Dadurch kann beispielsweise die Wandstärke des extrudierten Kunststoffschlauchs gezielt verändert werden. Es kann somit auch mit einem relativ grossen Düsenspalt ein dünnwandiger Schlauch erzeugt werden. Dies hat zum einen den Vorteil, dass trotz hohem Durchsatz der Druck im Extruderkopf vergleichsweise gering gehalten werden kann, und zum anderen die Dissipation und somit die Temperaturerhöhung im Schlauch geringer wird. Ein weiterer Vorteil besteht darin, dass auch bei der Verarbeitung von stark quellenden Materialien ein dünnwandiger Schlauch erzeugt werden kann, da aufgrund des grösseren Düsenspaltes und der damit verbundenen geringeren Scherung die Gefahr eines Schmelzebruchs verringert ist. Es kann auch vorgesehen sein, die Relativgeschwindigkeiten zwischen dem Extruderkopf und dem Blasdorn bzw. der Blasform während des kontinuierlichen Schlauchaustritts laufend gemäss einem Dehnungsprogramm zu verändern, um die Schlauchwandstärke im gewünschten Ausmass zu beeinflussen.

Zur Erzielung der Abstandsveränderung zwischen dem Extruderkopf und der Blasformwerkzeuganordnung besteht die Möglichkeit, den Extruderkopf oder die Blasformwerkzeuganordnung weg zu bewegen oder eine Kombination beider Bewegungen durchzuführen. Die Verstellung nur eines der beiden Geräteteile vereinfacht den konstruktiven Aufbau und die Steuerung der Bewegungsabläufe. Aus konstruktiven Überlegungen erweist es sich dabei als zweckmässig, wenn die Abstandsveränderung nur durch ein Wegbewegen des Extruderkopfes gegenüber der bezüglich ihrer Lage stationären Blasformwerkzeuganordnung erfolgt. Einerseits besteht im Bereich des Extruderkopfes mehr Raum für die Anbringung der Hubmittel. Andererseits ist es von Vorteil für die Zustellung des Blasdorns, wenn die Blasformwerkzeuganordnung während des gesamten Blaszyklusses ihre Position im wesentlichen unverändert beibehält. Die Blasformwerkzeuganordnung muss zur Aufnahme des Schlauchabschnitts in der Blasformkavität nur eine Öffnungs- und Schliessbewegung ausführen. Diese Vorgänge sind einfacher und exakter steuerbar, wenn die Blasformwerkzeuganordnung keine weitere Bewegung ausführt.

Bei einem diskontinuierlichen Blasverfahren wird der Kunststoffschlauch diskontinuierlich aus der Extrusionsdüse eines als Staukopf ausgebildeten Extruderkopfes in die Blasformkavität ausgestossen. Während des Ausstossens des Kunststoffschlauchs wird der Abstand des Blasdorns vom Staukopf vergrössert. Der Aufbau der Extrusionsblasmaschine für das diskontinuierliche Verfahren entspricht weitgehend demjenigen der kontinuierlichen Maschinen. Zum Unterschied von den bekannten diskontinuierlichen Verfahren wird jedoch der Schlauch während des Herstellungsprozesses permanent gehalten und kontrolliert geführt. Dadurch wird ein unkontrolliertes Pendeln des Schlauches verhindert. Ausserdem kann das Halten des Schlauches bei Bedarf auch für eine kontrollierte Dehnung oder Lageveränderung desselben eingesetzt werden.

Auch bei dem diskontinuierlichen Verfahren muss verhindert werden, dass der Schlauch auf die Oberfläche der Blasformwerkzeuganordnung aufläuft. Dazu wird die Geschwindigkeit der Abstandsveränderung des Blasdorns vom Staukopf gleich oder grösser eingestellt als die Ausstossgeschwindigkeit des Kunststoffschlauchs aus der Extrusionsdüse.

Das erfindungsgemässe Verfahren, bei dem der Kunststoffschlauch während eines gesamten Herstellungszyklusses kontrolliert geführt ist, erlaubt eine Verfahrensführung mit beliebiger Bewegungsrichtung des Kunststoffschlauchs. Während die bekannten Verfahren im Wesentlichen auf eine vertikale Extrusionsrichtung des Kunststoffschlauchs beschränkt sind, ermöglicht die Führung des Schlauchs auch eine schräge, ja sogar eine horizontale Ausrichtung. Aus Gründen der Kompatibilität mit bestehenden Maschinen wird jedoch eine axiale Ausrichtung bevorzugt. Eine axial ausgerichtete Anordnung des Extruderkopfes, der Blasformwerkzeuganordnung und des Blasdorns erlaubt eine relativ einfache Steuerung der axialen Bewegungskomponenten.

Mit Vorteil sind dabei die Austrittsgeschwindigkeit des Kunststoffschlauchs, die Extruderkopfbewegung, eine Verstellbewegung der Weite der Extrusionsdüse, die Blasdombewegung und die Öffnungs- bzw. Schliessbewegung der Blasformwerkzeuganordnung individuell und aufeinander abgestimmt einstellbar. Dies erlaubt die Umsetzung optimierter Bewegungsabläufe, die auf die Erfordernisse des zu blasenden Behältnisses abgestimmt sind, ohne dadurch am Gesamtkonzept des erfindungsgemässen Verfahrens Änderungen vornehmen zu müssen. Beispielsweise kann vorgesehen sein, dass der Kunststoffschlauch während eines Herstellungszyklusses schräg gestellt wird, um spezielle Geometrien von Blasformkavitäten optimal bedienen zu können und spezielle Behältergeometrien herzustellen.

In einer zweckmässigen Ausführungsvariante der Erfindung umfasst die Blasformwerkzeuganordnung wenigstens zwei voneinander trennbare Formteile, die zum Öffnen und Schliessen des Blasformwerkzeugs im Wesentlichen senkrecht zur Extrusionsrichtung aus einer Offen-Endstellung in eine Geschlossen-Endstellung und umgekehrt bewegt werden. Beispielsweise kann es sich um ein Blasformwerkzeug handeln, welches neben den Formteilen zum Aufbau des Behälterkörpers auch ein abhebbares Bodenteil aufweist. Bei einer in ihrer Lage fixierten Blasformwerkzeuganordnung können die Stellmittel für den Öffnungs- und Schliessvorgang gleichfalls ortsfest angeordnet sein. Der Verzicht auf eine zusätzliche Bewegungskomponente vereinfacht den mechanischen Aufbau und trägt auch dazu bei, den Steuerungsaufwand für die kontrollierten Bewegungen der Formteile zu reduzieren.

Die Vorteile des Verfahrens wurden am Beispiel eines Extruderkopfes mit nur einer Extrusionsdüse und einer Blasformwerkzeuganordnung mit nur einer Blasformkavität erläutert. Die Blasformwerkzeuganordnung kann beispielsweise auch ein Einzelwerkzeug oder eine Anordnung von Werkzeugen mit einer oder mehreren Blasformkavitäten sein, die miteinander gekoppelt sind. In einer zweckmässigen Verfahrensvariante werden ein Extruderkopf mit einem Mehrfachextrusionsdüsenwerkzeug und eine Blasformwerkzeuganordnung eingesetzt, welche mit einer korrespondierenden Anzahl von Blasformkavitäten ausgestattet ist. Ausserdem ist eine Anzahl von Blasdornen vorgesehen, die das ein- oder mehrfache der Zahl Blasformkavitäten beträgt und die zum Aufblasen der Kunststoffschläuche in die Mündungen der Blasformkavitäten eingefahren werden können. Auf diese Weise ist in einem Blaszyklus bei gleichbleibenden Maschinen- und Werkzeugparametern eine grössere Anzahl von Hohlkörpern, beispielsweise Kunststoffflaschen, erzeugbar. Dadurch wird der Durchsatz erhöht, und die Rentabilität einer Mehrfachblasformwerkzeuganordnung kann noch weiter verbessert werden.

Eine zur Durchführung des erfindungsgemässen Verfahrens geeignete Extrusionsblasvorrichtung zur Herstellung von Hohlkörpern, insbesondere von Kunststoffflaschen, weist einen in einem Geräterahmen angeordneten Extruderkopf mit einer Extrusionsdüse, eine Blasformwerkzeuganordnung mit wenigstens einer Blasformkavität, wenigstens einen Blasdorn und wenigstens eine Trenneinrichtung auf. Es sind an gegenüberliegenden Seiten der Blasformwerkzeuganordnung Halteeinrichtungen für den Kunststoffschlauch vorgesehen. Die Trenneinrichtung ist an der dem Extruderkopf abgewandten Seite der Blasformwerkzeuganordnung vorgesehen.

Durch das Vorsehen von Halteeinrichtungen für den Kunststoffschlauch zu beiden Seiten der Blaswerkzeuganordnung ist der Schlauch während des gesamten Herstellungszyklusses eines Behälters kontinuierlich gehalten. Dadurch sind die Voraussetzungen für die Verwendung einer einzigen Blasformkavität je Extrusionsdüse geschaffen. Totzeiten durch seitliche Bewegungen der Blasformwerkzeugeinrichtung werden vermieden. Durch die permanente Führung des Kunststoffschlauchs werden Fehllagen vermieden. Falls es erforderlich erscheint, kann die Lage des Schlauchs aber auch gezielt gegenüber der Extrusionsrichtung verändert werden. Auf diese Weise kann beispielsweise auch den Anforderungen von komplizierteren Behältergeometrien Rechnung getragen werden. Alle mit einer Extrusionsdüsen-Blasformwerkzeuganordung hergestellten Hohlkörper erfahren dieselben Einstell- und Werkzeugparameter. Qualitätsunterschiede infolge unterschiedlich grosser Werkzeugtoleranzen bei mehreren verschiedenen Blasformwerkzeugen entfallen. Totzeiten, die durch eine seitliche Verschiebung der Blasformwerkzeuganordnung gegenüber dem Extruderkopf auftreten, können vermieden werden, da die Blasformwerkzeuganordnung im Wesentlichen nur auf die Transportrichtung des Kunststoffschlauchs ausgerichtet ist. Das Aufblasen des in der Blasformkavität befindlichen Kunststoffschlauchs erfolgt unmittelbar nach der Beschickung der Blasformkavität mit dem extrudierten Kunststoffschlauch. Der Kunststoffschlauch ist während des gesamten Herstellungszyklusses in einer definierten Lage fixiert und kann nicht mehr um seine Achse pendeln. Der Extruderkopf und die Blasformwerkzeuganordnung verbleiben während des gesamten Extrusions- und Blasvorgangs im Wesentlichen in einer vorgebbaren und justierbaren, geometrischen Lagebeziehung, und der Kunststoffschlauch kann immer optimal übernommen werden. Dadurch wird auch bei komplizierteren Geometrien der Blasformkavität die Gefahr eines unbeabsichtigten Einklemmens des Kunststoffschlauchs verringert.

Die Haltevorrichtungen für den Schlauch werden einerseits durch den Blasdorn und andererseits durch den Extruderkopf gebildet. Durch den Einsatz bereits vorhandener Maschinenkomponenten für die Haltefunktion können der Aufbau einfach und die Bauweise kompakt gehalten werden.

Bei einer auch aus Platzgründen zweckmässigen Anordnung ist die Blasformwerkzeuganordnung zwischen dem Extruderkopf und dem Blasdorn angeordnet. Die Blasformkavität weist eine Mündung an der der Extrusionsdüse abgewandten Seite der Blasformwerkzeuganordnung auf, in welche der Blasdorn in die Blasformkavität einfahrbar ist. Bei dieser Anordnung sind die Verstell- und Zustellbewegungen der Gerätekomponenten im wesentlichen auf Bewegungen entlang der Bewegungsrichtung des Kunststoffschlauchs bzw. im Wesentlichen senkrecht beschränkt. Dies führt zu geringeren mechanischen Beanspruchungen und verringert die im Betrieb auftretenden Vibrationen und Erschütterungen.

Eine Ausführungsform der Erfindung sieht für die Blasformkavität zwei oder mehrere Blasdorne vor, die abwechselnd zustellbar sind. Dabei können die Blasdorne beispielsweise nebeneinander angeordnet sein und abwechselnd in die korrekte Position bewegt werden. Die Transportwege der Blasdorne sind sehr kurz. Dadurch können die Totzeiten für die Zustellung des Blasdorns kurz gehalten werden. Eine alternative Variante sieht vor, dass die Blasdorne an einer zentralen Blasdornhalterung montiert sind, und durch Rotation der Blasdornhalterung nacheinander zum Einsatz bringbar sind. Beispielsweise kann die Blasdornhalterung zwei Blasdorne tragen, die um 180° versetzt einander gegenüberliegen. Bei dieser Ausführungsvariante wird nach dem Aufblasen des Schlauchs und dem Öffnen des Blasformwerkzeugs die Blasdornhalterung um 180° gedreht. Der zweite Blasdorn ist somit bereits für das Aufblasen eines weiteren Schlauchabschnitts bereit, während der Hohlkörper am ersten Blasdorn noch auf seine Entnahme wartet. Es versteht sich, dass auch drehbare Blasdornhalterungen mit 3, 4 oder mehr Blasdornen vorgesehen sein können. Der Winkel, um den die Blasdornhalterung jeweils weitergedreht werden muss, ergibt sich dann aus der Teilung von 360° durch die Anzahl Blasdorne.

Mit Vorteil sind an jedem Blasdorn Kalibriereinrichtungen vorgesehen, mit denen während des Blasvorgangs die Öffnung des geblasenen Hohlkörpers kalibrierbar ist. Dadurch kann ein zeitaufwändiger Nachbearbeitungsschritt entfallen.

Um zu verhindern, dass während des Extrusions- und Blaszyklusses der Kunststoffschlauch auf Gerätekomponenten aufläuft oder durchhängt, sind Stellmittel vorgesehen, mit denen der relative Abstand zwischen dem Extruderkopf und der Blasformwerkzeuganordnung verstellbar ist. Eine vorteilhafte Variante sieht dabei vor, dass der Extruderkopf mit den Stellmitteln verbunden ist und gegenüber der stationären Blasformwerkzeuganordnung abstandsverstellbar ist. Diese Anordnung hat den Vorteil, dass an der Blasformwerkzeuganordnung im Wesentlichen nur Vorkehrungen für das Öffnen und Schliessen der Formteile vorgesehen sein müssen. Dies vereinfacht die Bewegungsabläufe und den Steuerungsaufwand.

Der Extruderkopf kann für eine kontinuierliche Extrusion des Kunststoffschlauchs ausgebildet sein. Bei dieser Ausführungsvariante erfolgt die Abstandsveränderung zwischen dem Extruderkopf und der Blasformwerkzeuganordnung wenigstens mit der Extrusionsgeschwindigkeit des Kunststoffschlauchs. In einer alternativen Ausführungsvariante der Erfindung ist der Extruderkopf als ein Staukopf zum diskontinuierlichen Ausstossen des Kunststoffschlauchs ausgebildet. Bei dieser Variante ist der Blasdorn zumindest mit der Ausstossgeschwindigkeit des Kunststoffschlauchs gegenüber der Blasformwerkzeuganordnung abstandsverstellbar.

Nachdem an beiden Seiten der Blasformwerkzeuganordnung Halteeinrichtungen für den Kunststoffschlauch vorgesehen sind, kann die Ausrichtung der Extrusionsdüse, der Blasformwerkzeuganordnung und des bzw. der Blasdorne beliebig gewählt werden. Aus Gründen der Kompatibilität mit bereits bestehenden Geräten und Anlagenkomponenten wird aber eine Anordnung bevorzugt, bei der der Extruderkopf eine im wesentlichen vertikal ausgerichtete Extrusionsdüse aufweist und die Blasformwerkzeuganordnung sowie der bzw. die Blasdorne vertikal untereinander angeordnet sind. Die vertikale Anordnung macht sich auch die in gewissem Ausmass stabilisierende Wirkung der Schwerkraft auf den extrudierten Kunststoffschlauch zu Nutze.

Die Blasformwerkzeuganordnung umfasst wenigstens zwei voneinander trennbare Formteile, die zum Öffnen und Schliessen im Wesentlichen senkrecht zur Extrusionsrichtung des Kunststoffschlauchs aus einer Offen-Endstellung in eine Geschlossen-Endstellung und umgekehrt bewegbar sind. Beispielsweise kann es sich um ein Blasformwerkzeug handeln, welches neben den Formteilen zum Aufbau des Behälterkörpers auch ein abhebbares Bodenteil aufweist. Bei einer in ihrer Lage fixierten Blasformwerkzeuganordnung können die Stellmittel für den Öffnungs- und Schliessvorgang gleichfalls ortsfest angeordnet sein. Der Verzicht auf eine zusätzliche Bewegungskomponente vereinfacht den mechanischen Aufbau und trägt auch dazu bei, den Steuerungsaufwand für die kontrollierten Bewegungen der Formteile zu reduzieren.

Aus Gründen des höheren Durchsatzes erweist es sich von Vorteil, wenn der Extruderkopf mehrere Extrusionsdüsen aufweist und die Blasformwerkzeuganordnung mit einer korrespondierenden Anzahl von Blasformkavitäten ausgestattet ist. Vorzugsweise ist dabei eine Anzahl von Blasdornen vorgesehen, die das Ein- oder Mehrfache der Anzahl Blasformkavitäten beträgt. Abgesehen von dem höheren Durchsatz und der verbesserten Rentabilität des Mehrfachblasformwerkzeugs ist bei dieser Ausführungsvariante in einem Blaszyklus eine grössere Anzahl von Hohlkörpern, beispielsweise Kunststoffflaschen, mit gleichbleibenden Maschinen- und Werkzeugparametern erzeugbar. Dies hat Vorteile hinsichtlich der Gleichmässigkeit der Qualität der erzeugten Produkte.

Weitere Vorteile und Merkmale der Erfindung ergeben sich aus der nachfolgenden Beschreibung unter Bezugnahme auf die schematischen Darstellungen eines Ausführungsbeispiels. Es zeigen:
Fig. 1 eine Prinzipdarstellung einer Extrusionsblasmaschine des Stand der Technik;
Fig. 2 ein Schema einer erfindungsgemässen Anordnung eines Extruderkopfes, eines Formwerkzeugs und eines Blasdoms; und
Figs. 3 - 11 schematische Darstellungen zur Erläuterung des erfindungsgemässen Verfahrens.

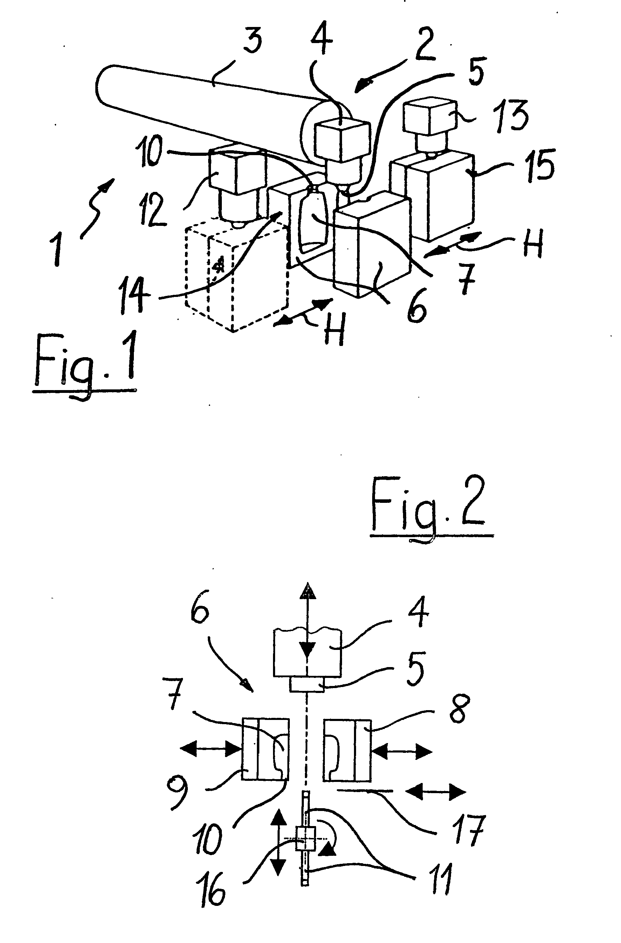

Die in Fig. 1 nur im Prinzip dargestellte Extrusionsblasmaschine des Stands der Technik ist gesamthaft mit dem Bezugszeichen 1 versehen. Der Aufbau derartiger Langhub-Extrusionblasmaschinen ist hinlänglich bekannt und beispielsweise in "Blow molding handbook, edited by Donald V. Rosato and Dominick V. Rosato, 1989, ISBN 1-56990-089-2, Library of Congress Catalogue Card Number 88-016270" beschrieben. Die Darstellung in Fig. 1 beschränkt sich daher auf die für das Verständnis unbedingt erforderlichen Bestandteile der Extrusionsblasmaschine 1. Bei dem dargestellten Ausführungsbeispiel handelt es sich um eine Zweistationenblasmaschine, wie sie auch von der Anmelderin angeboten wird. Sie weist eine Extrusionseinheit 2 und zwei Blasstationen 12, 13 auf. Die Extrusionseinheit 2 umfasst einen Extruder 3 für Kunststoffgranulat und einen damit verbundenen Extruderkopf 4, der wenigstens eine Extrusionsdüse 5 aufweist. Die Blasstationen 12, 13 besitzen jeweils einen Blaskopf mit einem Blasdorn. Jede Blasstation 12, 13 ist mit einem Blasformtisch 14, 15 ausgestattet, in dem Blasformwerkzeuge 6 montiert sind. Die Blasformwerkzeuge 6 umschliessen jeweils eine Blasformkavität 7, die der Form des herzustellenden Hohlkörpers, beispielsweise einer Flasche entspricht. Die Blasformkavitäten 7 besitzen an ihrer dem Extruderkopf 4 zugewandten Oberseite eine Mündung 8. Die Blasformtische 14,15 sind abwechselnd aus ihren seitlichen Endpositionen in den Blasstationen 12,13 in eine Position verschiebbar, in der die Mündung 8 des Blasformwerkzeugs 6 mit dem Ausgang der Extrusionsdüse 5 axial fluchtet. Die seitliche Verschiebung der Blasformtische 14, 15 erfolgt dabei im Wesentlichen senkrecht zur Längserstreckung des Extruders 3.

Das über den Extruder 3 zugeführten Kunststoffgranulat wird im Extruder 3 und/oder im Extruderkopf 4 aufgeschmolzen und von der Extrusionsdüse 5 als endloser Schlauch extrudiert. Der Schlauch kann ein- oder mehrschichtig extrudiert werden. Dazu können auch noch weitere Extruder vorgesehen sein, welche die erforderlichen unterschiedlichen Kunststoffmaterialien zum Extruderkopf 4 transportieren. Die Blasformtische 14, 15 mit den Blasformwerkzeugen 6 werden abwechselnd aus ihren Endpositionen in den Blasstationen 12, 13 seitlich unter den Extruderkopf 4 bewegt, die Blasformwerkzeuge 6 geöffnet und ein Stück des extrudierten Schlauchs abgeholt. Danach wird der jeweilige Blasformtisch 14, 15 wieder in seine Endposition in der Blasstation 12 bzw. 13 zurückbewegt. Dort wird dann mit Hilfe eines durch die Mündung 8 in die Kavität 7 eingefahrenen Blasdorns der Hohlkörper aufgeblasen. Der fertige Hohlkörper wird ausgestossen und der Zyklus wiederholt. Während in der einen Blasformstation 12 ein Schlauch aufgeblasen wird, wird der Blasformtisch 15 der zweiten Blasstation 13 seitlich unter den Extrusionskopf 4 bewegt, um ein weiteres Stück des extrudierten Schlauchs abzuholen. Auf diese Weise ist ein kontinuierlicher Betrieb ermöglicht.

Fig. 2 zeigt schematisch eine Anordnung der erfindungswesentlichen Gerätekomponenten. Dabei wurden die Bezeichnungen aus Fig. 1 beibehalten, um einen direkten Vergleich zu ermöglichen. Mit dem Bezugszeichen 4 ist wiederum der Extruderkopf bezeichnet, der die Extrusionsdüse 5 aufweist. Das Bezugszeichen 6 steht für das einzige Blasformwerkzeug der Extrusionsblasvorrichtung, welches im dargestellten Ausführungsbeispiel zwei Blasformhälften 8, 9 umfasst, die im geöffneten Zustand gezeigt sind. Die beiden Blasformhälften 8, 9 begrenzen die Blasformkavität 7, deren Mündung 10 an der der Extrusionsdüse 5 abgewandten Seite des Blasformwerkzeugs angeordnet ist. Geht man von der praxisgerechten Anordnung der Gerätekomponenten aus, dann befindet sich die Mündung 10 der Blasformkavität 7 an der Unterseite des Blasformwerkzeugs 6. Ein mit dem Bezugszeichen 11 bezeichneter Blasdorn ist an einer Blasdornhalterung 16 montiert. Im dargestellten Ausführungsbeispiel trägt die Blasdornhalterung 16 zwei Blasdorne 16, die durch Drehung der Blasdornhalterung 16 um 180° abwechselnd unter die Mündung 10 der Blasformkavität 7 bringbar sind. Der Extruderkopf 4 und das einzige Blasformwerkzeug 6 sind derart angeordnet, dass die Achse der Blasformkavität 7 und der Ausgang der Extrusionsdüse 5 am Extruderkopf 4 miteinander axial fluchten. Bei dem dargestellten Ausführungsbeispiel ist auch das Blasdompaar 11 derart angeordnet, das es mit der Achse der Blasformkavität 7 fluchtet. Dies ist jedoch kein zwingendes Erfordernis. Es versteht sich, dass bei einer exzentrisch angeordneten Mündung der Blasformkavität der Blasdorn entsprechend seitlich versetzt sein kann, Wesentlich an der erfindungsgemässen Anordnung ist jedoch, dass der Extruderkopf 4 und das Blasformwerkzeug 6 in axialer Richtung miteinander fluchten. Mit dem Bezugszeichen 17 ist noch ein Messer angedeutet, dass zur Abtrennung der einzelnen geblasenen Hohlkörper dient.

Die in Fig. 2 eingezeichneten Pfeile deuten die Verstellbarkeit der einzelnen Gerätekomponenten an. So ist der Extruderkopf 4 im wesentlichen nur bezüglich seiner Höhe verstellbar, um während des Extrusions- und Blasvorgangs den Abstand zum Blasformwerkzeug 6 zu verändern. Für die erforderliche Grundeinstellung und Feinjustierung weist er jedoch alle Freiheitsgrade auf. Die Blasformhälften 8, 9 des Blasformwerkzeugs 6 sind nur lateral aus einer Offen-Endstellung in eine Geschlossen-Endstellung und umgekehrt verstellbar. Bei dem dargestellten Ausführungsbeispiel weist das Blasformwerkzeug 6 keine Höhenverstellbarkeit auf. Das an der Blasdornhalterung 16 montierte Blasdompaar 11 ist höhenverstellbar, um in die Mündung 10 der Blasformkavität 7 eingefahren und wieder zurückgezogen werden zu können. Um die Blasdorne 11 abwechselnd einsetzen zu können, ist die Blasdornhalterung 16 auch noch drehbar.

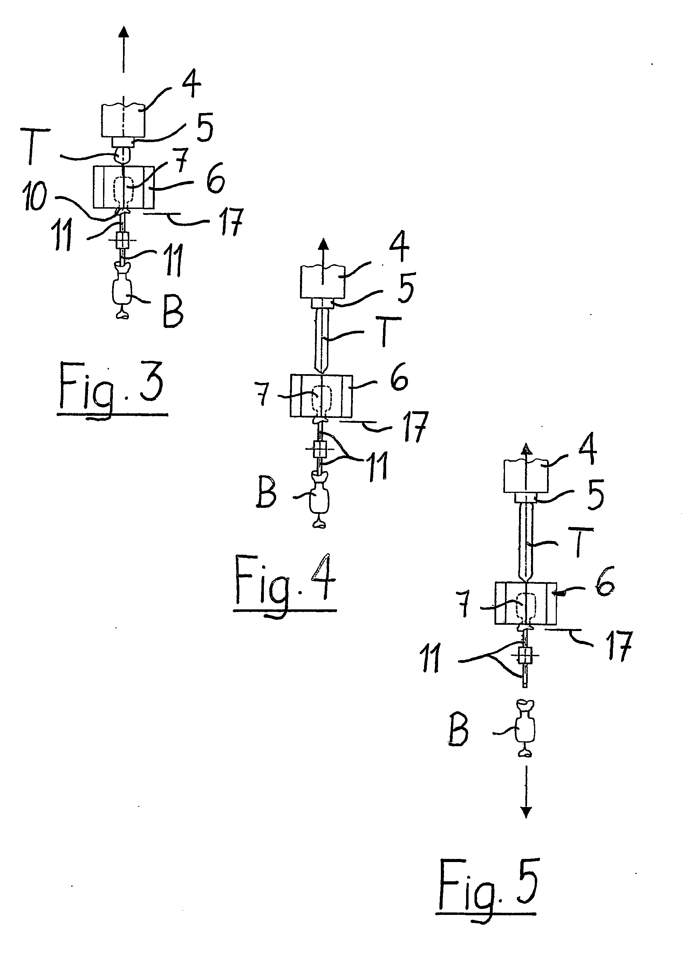

Die Darstellungen in Figs. 3 bis 11 dienen zur Erläuterung des Verfahrens zur Produktion eines Kunststoffhohlkörpers. Fig. 3 zeigt den Automatikzyklus beginnend mit dem Zustand, in dem das Blasformwerkzeug 6 geschlossen ist. Der kontinuierlich aus der Extrusionsdüse 5 des Extruderkopfes 4 extrudierte Schlauch T ist mit T angedeutet. Einer der beiden Blasdorne 11 ist in die Mündung 10 der Blasformkavität 7 eingefahren. Das Bezugszeichen 17 steht für das in diesem Zustand inaktive Messer. In dem in Fig. 3 dargestellten Zustand wird ein in der Blasformkavität befindlicher Schlauch gemäss der Blasformkavität aufgeblasen. Während des Blasvorgangs wird der Extruderkopf 4 kontinuierlich angehoben und der Höhenabstand zum Blasformwerkzeug kontinuierlich vergrössert. Dies ist in Fig. 4 durch die Verlängerung des extrudierten Schlauchs T angedeutet. Wird der Extruderkopf mit einer Geschwindigkeit angehoben, die grösser ist als die Extrusionsgeschwindigkeit des Kunststoffschlauchs, wird der Schlauch aus der Extrusionsdüse herausgezogen und gedehnt, und seine Wandstärke verringert sich. Während des Anhebens des Extruderkopfes 4 kann bei Bedarf ein Wanddickenregelungsprogramm gefahren werden, bei dem durch Variation der Spaltweite der Extrusionsdüse die Wanddicke des Schlauchs im gewünschten Umfang verändert werden kann. Während des Anhebens des Extruderkopfes kann auch ein Stützluftprogramm gefahren werden. Am ausserhalb der Blasformkavität befindlichen zweiten Blasdorn 11 hängt noch eine fertig geblasene Flasche B. In dieser Position könnte sie beispielsweise noch einem nicht näher dargestellten Nachkühlvorgang oder anderen Nachbearbeitungen unterzogen werden.

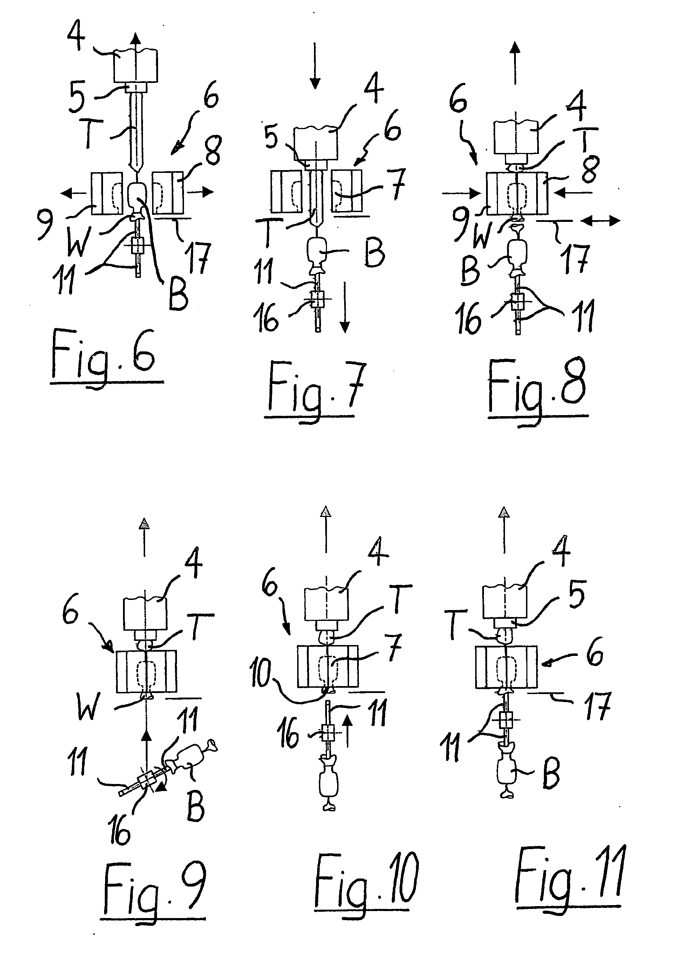

Das Ende des Blasvorgangs ist in Fig. 5 angedeutet. Der Extruderkopf 4 ist noch weiter vom Blasformwerkzeug 6 entfernt und wird weiter angehoben. Die in der Blasformkavität 7 befindliche aufgeblasene Flasche wird durch das Blasformwerkzeug 6 entlüftet. Die am unteren Blasdorn 11 hängende Flasche B wird abgenommen. Nach diesem Vorgang werden die Blasformhälften 8, 9 des Blasformwerkzeugs 6 geöffnet, was in Fig. 6 angedeutet ist. Der Extruderkopf 4 wird dabei immer noch angehoben. Nachdem die in der Blasformkavität aufgeblasene Flasche B völlig aus der Blasformkavität 7 entformt ist, wird die Bewegung des Extruderkopfes 4 gestoppt und umgekehrt. Wie in Fig. 7 dargestellt ist, wird der Extruderkopf 4 mit dem extrudierten Schlauchstück T und der damit noch verbundenen, fertig geblasenen Flasche B nach unten in Richtung des Blasformwerkzeugs 6 gefahren. Der an der Blasdornhalterung 16 montierte Blasdorn 11 wird gleichfalls abgesenkt.

Aus Figs. 6 und 7 ist deutlich ersichtlich, dass der extrudierte Schlauch T auch bei geöffnetem Blasformwerkzeug 6 in einer axial definiert ausgerichteten Lage gehalten ist. Dadurch dass der Schlauch immer noch mit dem fertig geblasenen Behälter B verbunden ist, ist der Schlauch einerseits von der Extrusionsdüse 6 und andererseits über den Blasdorn 11 fixiert. Dadurch wird ein Pendeln des Schlauchs T zuverlässig verhindert. Die Absenkgeschwindigkeit des Extrusionskopfes 4 und des Blasdorns 11 erfolgt mit Vorteil synchron und entspricht wenigstens der Extrusionsgeschwindigkeit des Schlauchs T. Durch einen vorgebbaren Unterschied der Absenkgeschwindigkeiten kann der kontinuierlich extrudierte Schlauch T im gewünschten Umfang gedehnt werden. Die axiale ausgerichtete Anordnung des Extruderkopfes 4, des Blasformwerkzeugs 6 und des Blasdorns 6 erlaubt auch eine relativ einfache Steuerung der axialen Bewegungskomponenten. Mit Vorteil sind dabei die Austrittsgeschwindigkeit des Kunststoffschlauchs T, die Bewegung des Blasdorns 11 und eine Verstellbewegung der Weite der Extrusionsdüse 5 individuell und aufeinander abgestimmt einstellbar. Dies erlaubt die Umsetzung optimierter Bewegungsabläufe, die auf die Erfordernisse des zu blasenden Behältnisses B abgestimmt sind, ohne dadurch am Gesamtkonzept des axial ausgerichteten Verfahrens Änderungen vornehmen zu müssen.

Fig. 8 zeigt den Zustand, in dem die Blasdornhalterung 16 ihre tiefste Position erreicht hat. Nun werden die Hälften des Blasformwerkzeugs 6 wieder geschlossen, um einen neuen Schlauchabschnitt in der Formkavität einzuschliessen. Kurz bevor das Blasformwerkzeug 6 völlig geschlossen ist, wird das Messer 17 seitlich zugestellt, um die fertig geblasenen Flasche B von dem aus der Mündung der Blasformkavität ragenden Abfallstück zu trennen. Dies ist in Fig. 8 durch einen Doppelpfeil angedeutet. Der Extruderkopf 4 hat mittlerweile seine Bewegungsrichtung wieder umgekehrt und wird wieder angehoben. Nach dem Abtrennen wird die Blasdornhalterung 16 gedreht, um den zweiten Blasdorn 11 auf die Mündung der Blasdornkavität auszurichten. Während des Drehens der Blasdornhalterung 16 kann diese bereits auf das Blasformwerkzeug 6 zugestellt werden. Die Drehung und die Höhenverstellung der Blasformhalterung 16 sind in Fig. 9 durch entsprechende Pfeile angedeutet. Während dieses Vorgangs wird der Extruderkopf 4 weiter angehoben. Fig. 10 zeigt den Zustand in dem der Drehvorgang der Blasdornhalterung 16 abgeschlossen ist und der Blasdorn 11 seine korrekte Hubposition erreicht hat. Danach wird er in die Mündung 10 der Blasformkavität 7 eingefahren. Dabei wird die spätere Öffnung der aufzublasenden Flasche kalibriert. Bereits während des Einfahrens des Blasdorns 11 in die Blasformkavität 7 kann mit dem Vorblasen begonnen werden. Der Extruderkopf 4 wird dabei weiter angehoben. In Fig. 11 ist der Blasdorn 11 endgültig in die Blasdornkavität des Blasformwerkzeugs 6 eingefahren und der Produktionszyklus startet wieder von vorne. Die Darstellung in Fig. 11 entspricht dabei der Darstellung in Fig. 3.

In den schematischen Zeichnungen sind ein Extruderkopf mit nur einer Extrusionsdüse und ein Blasformwerkzeug mit nur einer Blasformkavität dargestellt. Es versteht sich, dass die geschilderte Anordnung und das geschilderte Verfahren auch bei Extrusionsblasvorrichtungen mit Mehrfachdüsenwerkzeugen und Mehrfachblasformwerkzeugen oder Anordnungen von Einfach- und/oder Mehrfachblasformwerkzeugen anwendbar ist. Die Zahl der Blasdorne ist dabei auf die Anzahl der Blasformkavitäten abgestimmt.

Die Erfindung ist am Beispiel eines kontinuierlichen Extrusionsblasverfahrens und einer entsprechend ausgebildeten Vorrichtung mit vertikaler Anordnung des Extruderkopfes, des Blasformwerkzeuges und der Blasdorne erläutert worden. Es versteht sich, dass die Anordnung der Gerätekomponenten auch in horizontaler oder beliebiger Ausrichtung gemäss der Extrusionsrichtung erfolgen kann. Das erfindungsgemässe Verfahren ist auch bei einem diskontinuierlichen Extrusionsblasverfahren anwendbar und dementsprechend ist auch eine diskontinuierliche Extrusionsblasmaschine herstellbar. Die entscheidenden Faktoren beim diskontinuierlichen Verfahren sind gleichermassen das Vorsehen von Halteeinrichtungen für den Schlauch zu beiden Seiten der Blasformwerkzeuganordnung und die Reihenfolge der Anordnung Extruderkopf, Blasformwerkzeuganordnung und Blasdorn. Erfindungswesentlich ist der Umstand, dass der extrudierte Schlauch während eines gesamten Herstellungszyklusses in einer kontrollierbaren Lage gehalten ist und der Schlauch erst nach dem Aufblasen und Entformen des Behältnisses abgetrennt wird. Die Trennstelle befindet sich dabei an der dem Extruderkopf abgewandten Seite der Blasformwerkzeuganordnung.

## Patentansprüche

1. Verfahren zur Herstellung von Hohlkörpern, insbesondere von Kunststoffflaschen, bei dem von einem Extruderkopf (4) in einem vorgebbaren Takt ein Abschnitt eines Kunststoffschlauchs (T) in eine Kavität (7) einer Blasformwerkzeuganordnung (6) eingebracht wird, der Kunststoffschlauch (T) durch Überdruck gemäss der Blasformkavität (7) aufgeblasen und der Hohlkörper (B) entformt wird, wobei der Kunststoffschlauch (T) während eines gesamten Extrusions- und Blaszyklusses an einander gegenüberliegenden Seiten der Blasformwerkzeuganordnung (6) kontinuierlich gehalten wird und auf der dem Extruderkopf (4) abgewandten Seite der Blasformwerkzeuganordnung (6) abgetrennt wird, **dadurch gekennzeichnet, dass** der Kunststoffschlauch (T) bei geöffnetem Blasformwerkzeug durch den Extruderkopf (4) und einen Blasdorn (11) fixiert wird, welcher Blasdorn (11) zum Aufblasen des Kunststoffschlauchs (T) in eine Mündung der Blasformkavität (7) einfahrbar ist, die an der dem Extruderkopf (4) abgewandten Seite der Blasformwerkzeuganordnung (6) angeordnet ist.

2. Verfahren nach Anspruch 1, **dadurch gekennzeichnet, dass** der Kunststoffschlauch (T) nach dem Aufblasen und Entformen des Hohlkörpers (B) an der dem Extruderkopf (4) abgewandten Seite der Blasformwerkzeuganordnung (6) abgetrennt wird.

3. Verfahren nach Anspruch 1, **dadurch gekennzeichnet dass** für jede Blasformkavität (7) zwei oder mehrere Blasdorne (11) vorgesehen sind, die abwechselnd in die Blasformkavität (7) eingefahren werden.

4. Verfahren nach Anspruch 3, **dadurch gekennzeichnet, dass** für die Blasformkavität (7) zwei oder mehrere Blasdorne (11) vorgesehen sind, die derart an einer zentralen Blasdornhalterung (16) befestigt sind, dass sie durch Rotation der Blasdornhalterung (16) nacheinander zum Einsatz gelangen.

5. Verfahren nach Anspruch 3 oder 4, **dadurch gekennzeichnet, dass** jeder Blasdorn (11) mit einer Kalibriereinrichtung versehen ist, mit der während des Blasvorgangs die Öffnung des geblasenen Hohlkörpers (B) kalibriert wird.

6. Verfahren nach einem der vorangehenden Ansprüche, **dadurch gekennzeichnet, dass** der Kunststoffschlauch kontinuierlich extrudiert wird und nach der Übergabe des extrudierten Kunststoffschlauches (T) an die Blasformkavität (7) und während des Blasvorgangs der relative Abstand zwischen dem Extruderkopf (4) und der Blasformwerkzeuganordnung (6) vergrössert wird.

7. Verfahren nach Anspruch 6, **dadurch gekennzeichnet, dass** die Abstandsveränderung durch Wegbewegen des Extruderkopfes (4) von der bezüglich ihrer Lage im Wesentlichen stationären Blasformwerkzeuganordnung (6) erfolgt.

8. Verfahren nach Anspruch 6 oder 7, **dadurch gekennzeichnet, dass** die Abstandsveränderung mit einer Geschwindigkeit erfolgt die gleich oder grösser ist als eine Austrittsgeschwindigkeit des Kunststoffschlauchs aus der Extrusionsdüse (5) des Extruderkopfes (4).

9. Verfahren nach einem der Ansprüche 1 bis 5, **dadurch gekennzeichnet, dass** der Extruderkopf als ein Staukopf mit einer Extrusionsdüse ausgebildet ist, mit dem der Kunststoffschlauch diskontinuierlich in die Blasformkavität der Blasformwerkzeuganordnung ausgestossen wird, und dass während des Ausstossens des Kunststoffschlauchs der relative Abstand des Blasdorns vom Staukopf vergrössert wird.

10. Verfahren nach Anspruch 9, **dadurch gekennzeichnet, dass** die Geschwindigkeit der Abstandsveränderung des Blasdorns vom Staukopf gleich oder grösser ist als die Ausstossgeschwindigkeit des Kunststoffschlauchs aus der Extrusionsdüse.

11. Verfahren nach einem der vorangehenden Ansprüche, **dadurch gekennzeichnet, dass** der Kunststoffschlauch während des Herstellungszyklusses bezogen auf seine Extrusionsrichtung schräggestellt wird.

12. Verfahren nach einem der vorangehenden Ansprüche, **dadurch gekennzeichnet, dass** die Blasformwerkzeuganordnung (6) wenigstens zwei voneinander trennbare Werkzeugteile (8, 9) umfasst, die zum Öffnen und Schliessen des Blasformwerkzeugs (6) im wesentlichen senkrecht zur Extrusionsrichtung des Kunststoffschlauchs aus einer Offen-Endstellung in eine Geschlossen-Endstellung und umgekehrt bewegt werden.

13. Verfahren nach einem der vorangehenden Ansprüche, **dadurch gekennzeichnet, dass** ein Extruderkopf (4) mit einem Mehrfachextrusionsdüsenwerkzeug eingesetzt wird, eine Blasformwerkzeuganordnung (6) verwendet wird, welche mit einer korrespondierenden Anzahl von Blasformkavitäten (7) ausgestattet ist, und eine Anzahl von Blasdornen (11) vorgesehen ist, die vorzugsweise das ein- oder mehrfache der Zahl Blasformkavitäten (7) beträgt und die zum Aufblasen der Kunststoffschläuche (T) in die Mündungen (10) der Blasformkavitäten (7) eingefahren werden können.

14. Verfahren nach einem der vorangehenden Ansprüche, **dadurch gekennzeichnet, dass** die Austrittsgeschwindigkeit des Kunststoffschlauchs, die Extruderkopfbewegung, die Blasdornbewegung, eine Verstellbewegung der Weite der Extrusionsdüse und die Öffnungs- und Schliessbewegung der Blasformwerkzeuganordnung individuell und aufeinander abgestimmt einstellbar sind.

15. Vorrichtung zur Herstellung von Hohlkörpern (B), insbesondere von Kunststoffflaschen, mit einem in einem Geräterahmen angeordneten Extruderkopf (4) mit einer Extrusionsdüse (5), einer Blasformwerkzeuganordnung (6) mit einer Blasformkavität (7), mit wenigstens einer Trenneinrichtung (17) für den Kunststoffschlauch (T), wobei an einer Seite der Blasformwerkzeuganordnung der Extruderkopf eine erste Halteeinrichtung für den Kunststoffschlauch bildet und an einer gegenüberliegenden Seite der Blasformwerkzeuganordnung (6) eine zweite Halteeinrichtung für den Kunststoffschlauch (T) vorgesehen ist und die Trenneinrichtung an der dem Extruderkopf (4) abgewandten Seite der Blasformwerkzeuganordnung (6) angeordnet ist, **dadurch gekennzeichnet, dass** die zweite Halteeinrichtung für den Kunststoffschlauch (T) ein Blasdorn (11) ist, und dass die Blasformkavität (7) an der dem Extruderkopf (4) abgewandten Seite eine Mündungsöffnung aufweist, in welche der Blasdorn (11) einfahrbar ist.

16. Vorrichtung nach Anspruch 15, **dadurch gekennzeichnet, dass** für jede Blasformkavität (7) zwei oder mehrere Blasdorne (11) vorgesehen sind, die abwechselnd in die Blasformkavität (7) einfahrbar sind.

17. Vorrichtung nach Anspruch 16, **dadurch gekennzeichnet, dass** die Blasdorne (11) an einer zentralen Blasdornhalterung (16) montiert sind und durch Rotation der Blasdornhalterung (16) nacheinander zum Einsatz bringbar sind.

18. Vorrichtung nach einem der Ansprüche 15 bis 17**, dadurch gekennzeichnet, dass** jeder Blasdorn (11) mit einer Kalibriereinrichtung versehen ist, mit der während des Blasvorgangs die Öffnung des geblasenen Hohlkörpers (B) kalibrierbar ist.

19. Vorrichtung nach einem der Ansprüche 15 bis 18, **dadurch gekennzeichnet, dass** Stellmittel vorgesehen sind, mit denen während eines Herstellungszyklusses der relative Abstand zwischen Extruderkopf (4) der Blasformwerkzeuganordnung (6) verstellbar ist.

20. Vorrichtung nach Anspruch 19, **dadurch gekennzeichnet, dass** die Stellmittel mit dem Extruderkopf (4) verbunden sind.

21. Vorrichtung nach einem der Ansprüche 15 bis 20, **dadurch gekennzeichnet, dass** der Extruderkopf (4) für eine kontinuierliche Extrusion des Kunststoffschlauchs (T) ausgebildet ist.

22. Vorrichtung nach einem der Ansprüche 15 bis 20, **dadurch gekennzeichnet, dass** der Extruderkopf als ein Staukopf zum diskontinuierlichen Ausstossen des Kunststoffschlauchs ausgebildet ist, und der wenigstens eine Blasdorn zumindest mit der Ausstossgeschwindigkeit des Kunststoffschlauchs gegenüber der Blasformwerkzeuganordnung abstandsverstellbar ist.

23. Vorrichtung nach einem der Ansprüche 15 bis 22, **dadurch gekennzeichnet, dass** der Extruderkopf (4) eine im Wesentlichen vertikal ausgerichtete Extrusionsdüse (5) aufweist und die Blasformwerkzeuganordnung (6) sowie der wenigstens eine Blasdorn (11) vertikal untereinander angeordnet sind.

24. Vorrichtung nach einem der Ansprüche 15 bis 23, **dadurch gekennzeichnet, dass** die Blasformwerkzeuganordnung (6) wenigstens zwei voneinander trennbare Formteile (8, 9) umfasst, die zum Öffnen und Schliessen im wesentlichen senkrecht zur Extrusionsrichtung des Kunststoffschlauchs (T) aus einer Offen-Endstellung in eine Geschlossen-Endstellung und umgekehrt bewegbar sind.

25. Vorrichtung nach einem der Ansprüche 16 - 27, **dadurch gekennzeichnet, dass** ein Extruderkopf (4) mehrere Extrusionsdüsen (5) aufweist, die Blasformwerkzeuganordnung(6) mit einer korrespondierenden Anzahl von Blasformkavitäten (7) ausgestattet ist, und eine Anzahl von Blasdornen (11) vorgesehen ist, die das Ein- oder Mehrfache der Anzahl Blasformkavitäten (7) beträgt.

## Claims

1. Process for producing hollow bodies, especially plastic bottles, in which a segment of a plastic tube (T) is placed in the cavity (7) of a blow molding tool arrangement (6), the plastic tube (T)is blown by overpressure according to the blow molding cavity (7) and the hollow body (B) from the mold is removed, wherein the plastic tube (T) is continuously held during an entire extrusion and blowing cycle at opposite sides of the blow molding tool arrangement (6) and is separated on the side of the blow molding tool arrangement (6) which faces away from the extruder head (4), **characterized in that** the plastic tube (T) is fixed at opened blow molding tool by the extruder head (4) and a blowing mandrel (11) and **in that** the blowing mandrel (11) is insertable into a mouth (10) of the blow molding cavity (7) for inflation of the plastic tube (T), which mouth (10) is located on the side of the blow molding tool arrangement (6) facing away form the extruder head (4).

2. Process as claimed in claim 1, wherein the plastic tube (T) after inflation of the hollow body (B) is separated on the side of the blow molding tool arrangement (6) facing away from the extruder head (4).

3. Process as claimed in claim 1, wherein for each blow molding cavity (7) there are two or more blowing mandrels (11) which are transported in alternation into the blow molding cavity (7).

4. Process as claimed in claim 3, wherein for the blow molding cavity (7) there are two or more blowing mandrels (11) which are mounted on a central blowing mandrel support (16) such, that they are used in succession by rotation of the blowing mandrel support (16).

5. Process as claimed in claim 3 or 4, wherein each blowing mandrel (11) is provided with a calibration means with which the opening of the blown hollow body (B) is calibrated during the blowing process.

6. Process as claimed in any one of the preceding claims, wherein the plastic tube is continuously extruded and after transfer of the extruded plastic tube (T) to the blow molding cavity (7) and during the blowing process, the relative distance between the extruder head (4) and the blow molding tool arrangement (6) is increased.

7. Process as claimed in claim 6, wherein the distance is changed by moving the extrusion head (4) away from the blow molding tool arrangement (6) which is essentially stationary with respect to its location.

8. Process as claimed in claim 6 or 7, wherein the change in distance takes place with a speed which is greater than or equal to the exit speed of the plastic tube from the extrusion nozzle (5) of the extruder head (4).

9. Process as claimed in any one of claims 1 to 5, wherein the extruder head is made as a breaker head with an extrusion nozzle with which the plastic tube is discontinuously ejected into the blow molding cavity of the blow molding tool arrangement and wherein during ejection of the plastic tube the relative distance of the blowing mandrel from the breaker head is increased.

10. Process as claimed in claim 9, wherein the rate of change of the distance of the blowing mandrel from the breaker head is greater than or equal to the ejection speed of the plastic tube from the extrusion nozzle.

11. Process as claimed in any one of the preceding claims, wherein the plastic tube is inclined relative to its extrusion direction during the production cycle.

12. Process as claimed in any one of claims 1 to 11, wherein the blow molding tool arrangement (6) comprises at least two mold parts (8, 9) which can be separated from one another, and which are moved for opening and closing the blow molding tool
(6) essentially perpendicular to the extrusion direction of the plastic tube out of an open end position into a closed end position and vice versa.

13. Process as claimed in any one of the preceding claims, wherein an extruder head (4) with a multiple extrusion nozzle is used, a blow molding tool arrangement (6) is used which is equipped with a corresponding number of blow molding cavities (7), and there are a number of blowing mandrels (11) which is preferably one or more times the number of blow molding cavities (7) and which can be transported into the mouths (1) of the blow molding cavities (7) for inflating the plastic tubes (T).

14. Process as claimed in any one of the preceding claims 1, wherein the discharge rate of the plastic tube, the extruder head motion, the blowing mandrel motion, the adjustment motion of the width of the extrusion nozzle and the opening and closing motion of the blow molding tool arrangement can be adjusted individually and matched to one another.

15. Device, for producing hollow bodies, especially plastic bottles, having an extrusion head (4) which is located in an equipment frame and is equipped with an extrusion nozzle (5), a blow molding tool arrangement (6) with a blow molding cavity (7) with at least one separation means (17) for the plastic tube (T), wherein the extruder head forms on one side of the blow molding tool arrangement (6) a first holding device for the plastic tube and on an opposite side of the blow molding tool arrangement (6) a second holding device for the plastic tube (T) is arranged and the separation means is arranged on the side of blow molding tool arrangement (6) which faces away from the extruder head (4), **characterized in that** the second holding device for the plastic tube (T) is a blowing mandrel (11) and that the blow molding cavity (7) shows a mouth (10) on the side faced away from the extruder head (4)in which mouth (10) the blowing mandrel (11) is insertable.

16. Device as claimed in claim 15, wherein for each blow molding cavity (7) there are two or more blowing mandrels (11) which are transported in alternation into the blow molding cavity (7).

17. Device as claimed in claim 16, wherein the blowing mandrels (11) are mounted on a central blowing mandrel support (16) and can be used in succession by rotation of the blowing mandrel support (16).

18. Device as claimed in any one of claims 15 to 17, wherein each blowing mandrel (11) is provided with a calibration means with which the opening of the blown hollow body (B) can be calibrated during the blowing process.

19. Device as claimed in any one of claims 15 to18, wherein there are actuating means with which the relative distance between the extruder head (4) and the blow molding tool arrangement (6) can be adjusted.

20. Device as claimed in claim 19, wherein the actuating means are connected to the extruder head (4).

21. Device as claimed in any one of claims 15 to 20, wherein the extruder head (4) is made for continuous extrusion of the plastic tube (T).

22. Device as claimed in any one of claims 15 to 20, wherein the extruder head is made as a breaker head for discontinuous ejection of the plastic tube, and the distance of the blowing mandrel can be adjusted at least with the ejection speed of the plastic tube relative to the blow molding tool arrangement.

23. Device as claimed in any one of claims 15 to 22, wherein the extruder head (4) has an essentially vertically aligned extrusion nozzle (5) and the blow molding tool arrangement (6) and at least one blowing mandrel (11) are arranged vertically under one another.

24. Device as claimed in any one of claims 16 to 26, wherein the blow molding tool arrangement (6) comprises at least two mold parts (8, 9) which can be separated from one another and which are moved for opening and closing the blow molding tool essentially perpendicular to the extrusion direction of the plastic tube (T) out of an open end position into a closed end position and vice versa.

25. Device as claimed in any one of claims 16 to 24, wherein the extruder head (4) has several extrusion nozzles (5), the blow molding tool arrangement (6) is equipped with a corresponding number of blow molding cavities (7), and there is a number a blowing mandrels (11) which is one or more times the number of blow molding cavities (7).

## Revendications

1. Procédé de fabrication de corps creux, en particulier de bouteilles en matière plastique, pour lequel une section d'un tuyau en matière plastique (T) est mise en place dans une cavité (7) d'un arrangement d'outil de moulage par soufflage (6) par une tête d'extrudeuse (4) à une cadence qui peut être prédéfinie, le tuyau en matière plastique (T) est soufflé par surpression selon la cavité du moule de soufflage (7) et le corps creux (B) est démoulé, le tuyau en matière plastique (T) étant maintenu continuellement pendant tout un cycle d'extrusion et de soufflage sur des côtés opposés l'un à l'autre de l'arrangement d'outil de moulage par soufflage (6) et étant détaché sur le côté de l'arrangement d'outil de soufflage (6) qui est détourné de la tête d'extrudeuse (4), **caractérisé en ce que** le tuyau en matière plastique (T) est fixé par la tête d'extrudeuse (4) et un mandrin de soufflage (11), l'outil de moulage par soufflage étant ouvert, lequel mandrin de soufflage (11) peut être introduit, pour insuffler le tuyau en matière plastique (T), dans une embouchure de la cavité du moule de soufflage (7) qui est placée sur le côté de l'arrangement d'outil de moulage par soufflage (6) qui est détourné de la tête d'extrudeuse (4).

2. Procédé selon la revendication 1, **caractérisé en ce que** le tuyau en matière plastique (T) est détaché après le soufflage et le démoulage du corps creux (B) sur le côté de l'arrangement d'outil de soufflage (6) qui est détourné de la tête d'extrudeuse (4).

3. Procédé selon la revendication 1, **caractérisé en ce que** deux ou plusieurs mandrins de soufflage (11) qui sont introduits en alternance dans la cavité du moule de soufflage (7) sont prévus pour chaque cavité du moule de soufflage (7).

4. Procédé selon la revendication 3, **caractérisé en ce que** deux ou plusieurs mandrins de soufflage (11) sont prévus pour la cavité du moule de soufflage (7), mandrins qui sont fixés sur un support central de mandrins de soufflage (16) de telle manière qu'ils sont mis en oeuvre l'un après l'autre par rotation du support de mandrins de soufflage (16).

5. Procédé selon la revendication 3 ou 4, **caractérisé en ce que** chaque mandrin de soufflage (11) est pourvu d'un dispositif de calibrage avec lequel l'ouverture du corps creux soufflé (B) est calibrée pendant l'opération de soufflage.

6. Procédé selon l'une des revendications précédentes, **caractérisé en ce que** le tuyau en matière plastique est extrudé en continu et qu'après le transfert du tuyau en matière plastique extrudé (T) à la cavité du moule de soufflage (7) et pendant l'opération de soufflage la distance relative entre la tête d'extrudeuse (4) et l'arrangement d'outil de moulage par soufflage (6) est agrandie.

7. Procédé selon la revendication 6, **caractérisé en ce que** l'agrandissement de la distance se fait en écartant la tête d'extrudeuse (4) de l'arrangement d'outil de moulage par soufflage (6) qui est substantiellement stationnaire pour ce qui est de sa position.

8. Procédé selon la revendication 6 ou 7, **caractérisé en ce que** l'agrandissement de la distance se fait avec une vitesse qui est égale ou supérieure à une vitesse de sortie du tuyau en matière plastique de la tuyère d'extrusion (5) de la tête d'extrudeuse (4).

9. Procédé selon l'une des revendications 1 à 5, **caractérisé en ce que** la tête d'extrudeuse est configurée comme une tête de retenue avec une tuyère d'extrudeuse avec laquelle le tuyau en matière plastique est éjecté en discontinu dans la cavité du moule de soufflage de l'arrangement d'outil de moulage par soufflage (6) et que la distance relative du mandrin de soufflage est agrandie par la tête de retenue pendant l'éjection du tuyau en matière plastique.

10. Procédé selon la revendication 9, **caractérisé en ce que** la vitesse de l'agrandissement de la distance du mandrin de soufflage par la tête de retenue est égale ou supérieure à la vitesse d'éjection du tuyau en matière plastique hors de la tuyère d'extrusion.

11. Procédé selon l'une des revendications précédentes, **caractérisé en ce que** le tuyau en matière plastique est incliné par rapport à son sens d'extrusion pendant le cycle de fabrication.

12. Procédé selon l'une des revendications précédentes, **caractérisé en ce que** l'arrangement d'outil de moulage par soufflage (6) comprend au moins deux parties d'outil (8, 9) qui peuvent être séparées l'une de l'autre qui sont déplacées pour ouvrir et fermer l'outil de moulage par soufflage (6) essentiellement de manière perpendiculaire au sens de l'extrusion du tuyau en matière plastique d'une position terminale ouverte à une position terminale fermée et vice-versa.

13. Procédé selon l'une des revendications précédentes, **caractérisé en ce qu'**une tête d'extrudeuse (4) avec un outil de tuyère d'extrusion multiple est utilisée, qu'un arrangement d'outil de moulage par soufflage (6) est utilisé qui est équipé d'un nombre correspondant de cavités de moule de soufflage (7) et qu'il est prévu un nombre de mandrins de soufflage (11) qui, de préférence, est le simple ou le multiple du nombre de cavités du moule de soufflage (7) et qui peuvent être introduites dans les embouchures des cavités du moule de soufflage (7) pour souffler les tuyaux en matière plastique (T).

14. Procédé selon l'une des revendications précédentes, **caractérisé en ce que** la vitesse de sortie du tuyau en matière plastique, le mouvement de la tête d'extrudeuse, le mouvement du mandrin de soufflage, un mouvement d'ajustage de la largeur de la tuyère d'extrusion et le mouvement d'ouverture et de fermeture de l'arrangement d'outil de moulage par soufflage (6) peuvent être réglés individuellement et en étant adaptés l'un par rapport à l'autre.

15. Dispositif pour la fabrication de corps creux (B), en particulier de bouteilles en matière plastique, avec une tête d'extrudeuse (4) avec une tuyère d'extrusion (5), tête d'extrusion placée dans un bâti d'appareil, un arrangement d'outil de moulage par soufflage (6) avec une cavité de moule de soufflage (7), avec au moins un dispositif de séparation (17) pour le tuyau en matière plastique (T), la tête d'extrudeuse formant, sur un côté de l'arrangement d'outil de moulage par soufflage (6), un premier dispositif de maintien pour le tuyau en matière plastique et qu'il est prévu, sur un côté opposé de l'arrangement d'outil de moulage par soufflage (6), un second dispositif de maintien pour le tuyau en matière plastique (T) et le dispositif de séparation étant placé sur le côté de l'arrangement d'outil de moulage par soufflage (6) qui est détourné de la tête d'extrudeuse (4), **caractérisé en ce que** le second dispositif de maintien pour le tuyau en matière plastique (T) est un mandrin de soufflage (11) et que la cavité de moule de soufflage (7) présente, sur le côté détourné de la tête d'extrudeuse (4), une ouverture d'embouchure dans laquelle le mandrin de soufflage (11) peut être introduit.

16. Dispositif selon la revendication 15, **caractérisé en ce que** deux ou plusieurs mandrins de soufflage (11), qui peuvent être introduits en alternance dans la cavité de moule de soufflage (7), sont prévus pour chaque cavité de moule de soufflage (7).

17. Dispositif selon la revendication 16, **caractérisé en ce que** les mandrins de soufflage (11) sont montés sur un support central de mandrins de soufflage (16) et peuvent être mis en oeuvre l'un après l'autre par rotation du support de mandrins de soufflage (16).

18. Dispositif selon l'une des revendications 15 à 17, **caractérisé en ce que** chaque mandrin de soufflage (11) est pourvu d'un dispositif de calibrage avec lequel l'ouverture du corps creux soufflé (B) peut être calibrée pendant l'opération de soufflage.

19. Dispositif selon l'une des revendications 15 à 18, **caractérisé en ce que** des moyens d'ajustage sont prévus avec lesquels la distance relative entre la tête d'extrudeuse (4) de l'arrangement d'outil de moulage par soufflage (6) peut être réglée pendant un cycle de fabrication.

20. Dispositif selon la revendication 19, **caractérisé en ce que** les moyens d'ajustage sont reliés à la tête d'extrudeuse (4).

21. Dispositif selon l'une des revendications 15 à 20, **caractérisé en ce que** la tête d'extrudeuse (4) est configurée pour une extrusion continue du tuyau en matière plastique (7).

22. Dispositif selon l'une des revendications 15 à 20, **caractérisé en ce que** la tête d'extrudeuse est configurée comme une tête de retenue pour l'éjection discontinue du tuyau en matière plastique et que le mandrin de soufflage qui existe au moins est réglable en écartement par rapport à l'arrangement d'outil de moulage par soufflage (6) au moins avec la vitesse d'éjection du tuyau en matière plastique.

23. Dispositif selon l'une des revendications 15 à 22, **caractérisé en ce que** la tête d'extrudeuse (4) présente une tuyère d'extrusion (5) substantiellement orientée verticalement et l'arrangement d'outil de moulage par soufflage (6) ainsi que le mandrin de soufflage qui existe au moins (11) sont placés l'un en dessous de l'autre verticalement.

24. Dispositif selon l'une des revendications 15 à 23, **caractérisé en ce que** l'arrangement d'outil de moulage par soufflage (6) comprend au moins deux parties moulées (8, 9) pouvant être séparées l'une de l'autre qui peuvent être déplacées, pour l'ouverture et la fermeture, substantiellement perpendiculairement au sens d'extrusion du tuyau en matière plastique (T) d'une position terminale ouverte à une position terminale fermée et vice-versa.

25. Dispositif selon l'une des revendications 16 à 27, **caractérisé en ce qu'**une tête d'extrudeuse (4) présente plusieurs tuyères d'extrusion (5), l'arrangement d'outil de moulage par soufflage (6) est équipé d'un nombre correspondant de cavités de moule de soufflage (7) et il est prévu un nombre de mandrins de soufflage (11) qui est le simple ou le multiple du nombre de cavités de moule de soufflage (7).
